# EUROPEAN PATENT SPECIFICATION

(11) **EP 2 463 337 B1**
(45) Date of publication and mention of the grant of the patent: **20.08.2014**
(21) Application number: 10806592.1
(22) Date of filing: 24.05.2010
(51) Int. Cl.: C08L 55/02, C08L 35/06, C08L 35/04, C08K 5/00, C08L 51/04, C08L 33/06

(54) **THERMOPLASTIC RESIN COMPOSITION**
THERMOPLASTISCHE HARZZUSAMMENSETZUNG
COMPOSITION DE RÉSINE THERMOPLASTIQUE

(30) Priority: 07.08.2009 KR 20090072576
(43) Date of publication of application: 13.06.2012
(73) Proprietor: LG Chem, Ltd., Youngdungpo-gu Seoul 150-721 (KR)
(72) Inventor: KIM, Min-Jung, Daejeon 305-308 (KR); HWANG, Yongyeon, Daejeon 305-330 (KR); SONG, Kiheon, Yongin-si Gyeonggi-do 448-974 (KR); HAN, Hyekyung, Daejeon 305-340 (KR)
(74) Representative: Goddar, Heinz J.
(86) International application number: PCT/KR2010/003262
(87) International publication number: WO 2011/016617

(56) References cited:
- WO-A1-93/07212
- WO-A1-2006/071097
- JP-A- 2001 040 171
- KR-B1- 100 702 437
- US-A- 4 395 516
- US-A- 5 756 576
- US-A- 5 824 741
- DATABASE CA [Online] CHEMICAL ABSTRACTS SERVICE, COLUMBUS, OHIO, US; NAGAI, IKUO ET AL: "Impact-resistant thermoplastic resin compositions", XP002712449, retrieved from STN Database accession no. 1973:112171 & JP 46 026864 B (TORAY INDUSTRIES, INC.) 4 August 1971 (1971-08-04)

## Description

### [Technical Field]

The present invention relates to a thermoplastic resin composition. More specifically, the present invention relates to a thermoplastic resin composition comprising: a) 20 to 60 parts by weight of a first graft copolymer of an aromatic vinyl compound and a vinyl cyanide compound on a rubber latex; b) 0.1 to 40 parts by weight of a second copolymer of a (meth)acrylic acid alkyl ester compound, an aromatic vinyl compound, and a vinyl cyanide compound; and c) 40 to 80 parts by weight of a third copolymer of a (meth)acrylic acid alkyl ester compound, an aromatic vinyl compound and an acid anhydride, based on the total weight of the thermoplastic resin composition.

### [Background Art]

High-impact resistant thermoplastic resin is obtained by incorporating particulate rubber into a styrene-acrylonitrile copolymer. In general, the high-impact resistant thermoplastic resin is prepared by graft copolymerizing styrene and acrylonitrile in the presence of a rubber and mixing the graft copolymer with a separately prepared hard matrix resin containing a styrene-acrylonitrile copolymer.

The high-impact resistant thermoplastic resin is widely used for interior and exterior materials of vehicles, billboards and electrical and electric appliance components due to superior impact resistance, processability and chemical resistance. Of these, acrylonitrile/butadiene/styrene (ABS) and acrylate/styrene/acrylonitrile (ASA) used for interior and exterior materials of vehicles increasingly require high functionalities and high heat resistance.

In addition, in accordance with a recent increase in sensibility of users, a plating or coating process to impart luxury and exclusivity is required. Due to problems including an increase in costs due to the additional process, environmental problems during the coating process and the difficulty of recycling coated products, there is a demand for preparation of resins with superior colorability and scratch resistance to express an aesthetically pleasing appearance without coating.

General methods for improving the heat resistance of high impact resistance thermoplastic resins include incorporation of maleimide-based or alpha-methyl styrene-based monomers with superior heat resistance during polymerization and mixing a heat-resistant copolymer containing the monomer with superior heat resistance with a thermoplastic resin. This method entails a deterioration in colorability due to inherent color of the heat-resistant copolymer and limitation of improvement of scratch resistance and weather resistance.

Accordingly, preparation of a thermoplastic resin composition with superior scratch resistance, colorability, impact strength and excellent heat resistance remains a technical problem.

Nagai, Ikuo et al. retrieved from STN databases accession No. 1973:112171 and JP46026864B refer to the impact strength of styrene-acrylonitrile copolymer, styrene-methyl methacrylate-acrylonitrile copolymer, and α-methylstyrene-styrene-acrylonitrile copolymer, which was improved by incorporating 3-45 parts of a grafted elastomer.

WO 93/07212 A1 discloses a polymer composition containing a polymer that contains vinyl-aromatic monomer units and acrylonitrile monomeric units and a polymer that contains vinyl-aromatic monomeric units, dicarboxylic acid anhydride monomeric units and/or imide monomeric units, and at least 1 wt.% spirodilactone monomeric unit.

WO 2006/071097 A1 provides a thermoplastic resin composition including a graft ABS polymer, an α-methylstyrene copolymer, an imide-substituted copolymer, and an additive.

### [Disclosure]

### [Technical Problem]

Therefore, the present invention has been made in view of the above problems and it is one object of the present invention to provide a thermoplastic resin composition with superior scratch resistance, colorability, impact strength and weather resistance as well as excellent heat resistance.

The above and other objects can be accomplished by the present invention.

### [Technical Solution]

In accordance with one aspect of the present invention, provided is a thermoplastic resin composition comprising: a) 20 to 60 parts by weight of a first graft copolymer of an aromatic vinyl compound and a vinyl cyanide compound on a rubber latex; b) 0.1 to 40 parts by weight of a second copolymer of a (meth)acrylic acid alkyl ester compound, an aromatic vinyl compound, and a vinyl cyanide compound; and c) 40 to 80 parts by weight of a third copolymer of a (meth)acrylic acid alkyl ester compound, an aromatic vinyl compound and an acid anhydride, based on the total weight of the thermoplastic resin composition.

### [Advantageous Effects]

As apparent from the foregoing the present invention provides a thermoplastic resin composition with superior scratch resistance, colorability, impact strength and weather resistance as well as excellent heat resistance, as compared to conventional thermoplastic resin compositions.

### [Best Mode]

Hereinafter, the present invention will be described in more detail.

The present invention is directed to a thermoplastic resin composition comprising: a) 20 to 60 parts by weight of a first graft copolymer of an aromatic vinyl compound and a vinyl cyanide compound on a rubber latex; b) 0.1 to 40 parts by weight of a second copolymer of a (meth)acrylic acid alkyl ester compound, an aromatic vinyl compound, and a vinyl cyanide compound; and c) 40 to 80 parts by weight of a third copolymer of a (meth)acrylic acid alkyl ester compound, an aromatic vinyl compound and an acid anhydride, based on the total weight of the thermoplastic resin composition.

In addition, in the process of polymerizing the third copolymer (c), the thermoplastic resin composition may be prepared using at least one additional co-monomer selected from the group consisting of an unsaturated acid compound, an imide-based compound and a vinyl cyanide compound.

Examples of useful unsaturated acid compounds include acrylic acid and methacrylic acid.

Examples of useful imide-based compounds include maleimide, N-methyl maleimide, N-ethyl maleimide, N-isopropyl maleimide, N-lauryl maleimide, N-benzyl maleimide, N-tribromophenyl maleimide, N-butyl maleimide, N-phenyl maleimide,and N-cyclohexyl maleimide.

The vinyl cyanide compound may be selected from acrylonitrile, methacrylonitrile and mixtures thereof.

The first graft copolymer (a) may be used in an amount of 20 to 60 parts by weight, preferably, 30 to 50 parts by weight, based on the total weight of the thermoplastic resin composition. When the content is lower than 20 parts by weight, impact resistance is disadvantageously deteriorated and when the content is higher than 60 parts by weight, scratch resistance, colorability and hardness are disadvantageously deteriorated.

The second copolymer (b) may be used in an amount of 0.1 to 40 parts by weight, preferably 3 to 20 parts by weight, based on the total weight of the thermoplastic resin composition. When the content is lower than 0.1 parts by weight, miscibility and impact resistance are disadvantageously deteriorated and when the content is higher than 40 parts by weight, heat resistance is disadvantageously deteriorated.

The (c) third copolymer may be used in an amount of 40 to 80 parts by weight, preferably 40 to 60 parts by weight, based on the total weight of the thermoplastic resin composition. When the content is lower than 40 parts by weight, scratch resistance, colorability, weather resistance and heat resistance are disadvantageously deteriorated, and when the content is higher than 80 parts by weight, impact resistance is disadvantageously deteriorated.

The first graft copolymer (a) can be prepared by graft polymerizing 20 to 70% by weight of acrylic rubber latex or conjugated diene rubber latex, 10 to 50% by weight of an aromatic vinyl compound and 5 to 35% by weight of a vinyl cyanide compound.

The acrylic rubber latex is an alkyl acrylate rubber polymer and may be selected from butyl acrylate, ethyl hexyl acrylate, and mixtures thereof.

The conjugated diene rubber latex may be selected from a butadiene rubber latex, a styrene-butadiene copolymer rubber, an acrylonitrile-butadiene copolymer rubber, an ethylene-propylene diene-based rubber and a mixture thereof.

The rubber latex has a glass transition temperature of -90°C to -20°C and an average particle diameter of 80 to 600 nm.

The content of the rubber latex is 20 to 70% by weight, preferably 40 to 60% by weight, based on the weight of the first graft copolymer. When the content is lower than 20% by weight, a problem associated with production efficiency occurs and when the content is higher than 70% by weight, a problem associated with an aggregation process occurs.

The aromatic vinyl compound is at least one selected from the group consisting of styrene, alpha-methyl styrene, para-methyl styrene and vinyl toluene.

The content of the aromatic vinyl compound is 10 to 50% by weight, preferably 25 to 45% by weight, based on the first graft copolymer.

The vinyl cyanide compound is selected from acrylonitrile, methacrylonitrile and mixtures thereof. The content of the vinyl cyanide compound is 5 to 35% by weight, preferably 10 to 20% by weight, based on the weight of the first graft copolymer.

The second copolymer (b) is prepared by polymerizing 40 to 80% by weight of a (meth)acrylic acid alkyl ester compound, 10 to 40% by weight of an aromatic vinyl compound and 1 to 20% by weight of a vinyl cyanide compound.

The (meth)acrylic acid alkyl ester compound is at least one selected from the group consisting of (meth)acrylic acid methyl ester, (meth)acrylic acid ethyl ester, (meth)acrylic acid propyl ester, (meth)acrylic acid 2-ethyl hexyl ester, (meth)acrylic acid decyl ester and (meth)acrylic acid lauryl ester.

The content of the (meth)acrylic acid alkyl ester compound is 40 to 80% by weight, preferably 55 to 75% by weight, based on the weight of the second copolymer. When the content is lower than 40% by weight, scratch resistance is disadvantageously deteriorated and when the content is higher than 80% by weight, impact resistance is disadvantageously deteriorated.

The aromatic vinyl compound is at least one selected from the group consisting of styrene, alpha-methyl styrene, para-methyl styrene and vinyl toluene.

The content of the aromatic vinyl compound is 10 to 40% by weight, preferably 20 to 30% by weight, based on the weight of the second copolymer. When the content is lower than 10% by weight, processability is disadvantageously deteriorated, and when the content is higher than 40% by weight, scratch resistance is disadvantageously deteriorated.

The vinyl cyanide compound is selected from acrylonitrile, methacrylonitrile and mixtures thereof.

The content of the vinyl cyanide compound is 1 to 20% by weight, preferably 5 to 15% by weight, based on the weight of the second copolymer. When the content is lower than 1% by weight, chemical resistance is disadvantageously deteriorated, and when the content is higher than 20% by weight, formability and thermal stability are disadvantageously deteriorated.

The (c) third copolymer is prepared by polymerizing 40 to 80% by weight of a (meth)acrylic acid alkyl ester compound, 10 to 40% by weight of an aromatic vinyl compound, 5 to 20% by weight of an acid anhydride and 0 to 10% by weight of additional co-monomer.

The (meth)acrylic acid alkyl ester compound is at least one selected from (meth)acrylic acid methyl ester, (meth)acrylic acid ethyl ester, (meth)acrylic acid propyl ester, (meth)acrylic acid 2-ethylhexyl ester, (meth)acrylic acid decyl ester and (meth)acrylic acid lauryl ester.

The content of the (meth)acrylic acid alkyl ester compound is 40 to 80% by weight, preferably 55 to 75% by weight, based on the weight of the third copolymer. When the content is lower than 40% by weight, scratch resistance is disadvantageously deteriorated, and when the content is higher than 80% by weight, impact resistance is disadvantageously deteriorated.

The aromatic vinyl compound is at least one selected from the group consisting of styrene, alpha-methylstyrene, para-methylstyrene and vinyl toluene.

The content of the aromatic vinyl compound is 10 to 40% by weight, preferably 20 to 30% by weight, based on the weight of the third copolymer. When the content is lower than 10% by weight, processability is disadvantageously deteriorated, and when the content is higher than 40% by weight, scratch resistance is disadvantageously deteriorated.

The acid anhydride is selected from maleic anhydride, itaconic anhydride, citraconic anhydride and a mixture thereof. The content of the acid anhydride is 5 to 20% by weight, preferably 5 to 15% by weight, based on the weight of the third copolymer. When the content is lower than 5% by weight, heat resistance is disadvantageously deteriorated, and when the content is higher than 20% by weight, impact resistance is disadvantageously deteriorated.

In addition, the additional co-monomer is at least one selected from the group consisting of an unsaturated acid compound, an imide-based compound and a vinyl cyanide compound.

The unsaturated acid compound may be acrylic acid or methacrylic acid.

The imide-based compound may be maleimide, N-methyl maleimide, N-ethyl maleimide, N-isopropyl maleimide, N-lauryl maleimide, N-benzyl maleimide, N-tribromophenyl maleimide, N-butyl maleimide, N-phenyl maleimide or N-cyclohexyl maleimide.

The vinyl cyanide compound may be selected from acrylonitrile, methacrylonitrile and mixtures thereof.

The thermoplastic resin composition of the present invention may further comprise an additive such as a lubricant, an antioxidant, a UV stabilizer, a pigment and an inorganic filler.

In addition, a method for preparing the first graft copolymer, second copolymer, and third copolymer according to the present invention may be a common method well-known in the art and is not limited to any one method.

### [Example]

### Example 1

A thermoplastic resin composition was prepared by mixing 40 parts by weight of a graft copolymer in which a ratio of butyl acrylate-styrene-acrylonitrile was 50:35:15 (butyl acrylate:styrene:acrylonitrile)on the basis of wt%, 10 parts by weight of a copolymer in which a ratio of methyl methacrylate-styrene-acrylonitrile was 70:25:5 (methyl methacrylate:styrene:acrylonitrile) on the basis of wt%, 50 parts by weight of a copolymer in which a ratio of styrene-methyl methacrylate-anhydride was 23:70:7 (styrene:methyl methacrylate:anhydride) on the basis of wt%, 1 part by weight of a lubricant, 0.5 parts by weight of an antioxidant, and 0.5 parts by weight of a UV block.

### Example 2

A thermoplastic resin composition was prepared in the same manner as in Example 1, except that 30 parts by weight of a butyl acrylate-styrene-acrylonitrile graft copolymer, 10 parts by weight of a methyl methacrylate-styrene-acrylonitrile copolymer, and 60 parts by weight of a styrene-methyl methacrylate-maleic anhydride copolymer were used.

### Example 3

A thermoplastic resin composition was prepared in the same manner as in Example 1, except that 50 parts by weight of a butyl acrylate-styrene-acrylonitrile graft copolymer, 10 parts by weight of a methyl methacrylate-styrene-acrylonitrile copolymer, and 40 parts by weight of a styrene-methyl methacrylate-maleic anhydride copolymer were used.

### Example 4

A thermoplastic resin composition was prepared in the same manner as in Example 1, except that 40 parts by weight of a butyl acrylate-styrene-acrylonitrile graft copolymer, 3 parts by weight of a methyl methacrylate-styrene-acrylonitrile copolymer, and 57 parts by weight of a styrene-methyl methacrylate-maleic anhydride copolymer were used.

### Example 5

A thermoplastic resin composition was prepared in the same manner as in Example 1, except that 40 parts by weight of a butyl acrylate-styrene-acrylonitrile graft copolymer, 20 parts by weight of a methyl methacrylate-styrene-acrylonitrile copolymer, and 40 parts by weight of a styrene-methyl methacrylate-maleic anhydride copolymer were used.

### Example 6

A thermoplastic resin composition was prepared in the same manner as in Example 1, except that, instead of the styrene-methyl methacrylate-maleic anhydride copolymer, a copolymer in which a ratio of styrene-methyl methacrylate-maleic anhydride-acrylonitrile was 23:65:7:5 (styrene:methyl methacrylate:maleic anhydride:acrylonitrile) on the basis of wt% weight was used.

### Example 7

A thermoplastic resin composition was prepared in the same manner as in Example 1, except that, instead of the butyl acrylate-styrene-acrylonitrile graft copolymer, a butadiene-styrene-acrylonitrile graft copolymer was used.

### Comparative Example 1

A thermoplastic resin composition was prepared in the same manner as in Example 1, except that a butyl acrylate-styrene-acrylonitrile graft copolymer was not used and 30 parts by weight of a methyl methacrylate-styrene-acrylonitrile copolymer and 70 parts by weight of a styrene-methyl methacrylate-maleic anhydride copolymer were used.

### Comparative Example 2

A thermoplastic resin composition was prepared in the same manner as in Example 1, except that a styrene-methyl methacrylate-maleic anhydride copolymer was not used, and 40 parts by weight of a butyl acrylate-styrene-acrylonitrile graft copolymer and 60 parts by weight of a methyl methacrylate-styrene-acrylonitrile copolymer were used.

### Comparative Example 3

A thermoplastic resin composition was prepared in the same manner as in Example 1, except that a methyl methacrylate-styrene-acrylonitrile copolymer was not used and 40 parts by weight of a butyl acrylate-styrene-acrylonitrile graft copolymer and 60 parts by weight of styrene-methyl methacrylate-maleic anhydride copolymer were used.

### Comparative Example 4

A thermoplastic resin composition was prepared in the same manner as in Example 1, except that a methyl methacrylate-styrene-acrylonitrile copolymer and a styrene-methyl methacrylate-maleic anhydride copolymer were not used, and 40 parts by weight of a butyl acrylate-styrene-acrylonitrile graft copolymer, and 60 parts by weight of a copolymer in which a ratio of styrene to acrylonitrile was 75:25 (styrene:acrylonitrile) (wt%) were used.

### Comparative Example 5

A thermoplastic resin composition was prepared in the same manner as in Example 1, except that a methyl methacrylate-styrene-acrylonitrile copolymer and a styrene-methyl methacrylate-maleic anhydride copolymer were not used and 40 parts by weight of a butadiene-styrene-acrylonitrile graft copolymer was used, and 60 parts by weight of a copolymer in which a ratio of styrene to acrylonitrile was 75:25 (styrene:acrylonitrile) (wt%) was used, instead of the butyl acrylate-styrene-acrylonitrile graft copolymer.

The thermoplastic resin compositions prepared in Examples 1 to 7 and Comparative Examples 1 to 5 were formed into a pellet at a cylinder temperature of 220°C using a 40ø extrusion kneader, the pellet was subjected to injection molding to prepare specimens for physical property testing, and physical properties of the specimens were measured. The results are summarized in Tables 1 and 2.

### [Evaluation of physical properties]

a) Izod impact strength (Izod Impact, 1/4" notched at 23°C, kg·cm/cm) was measured in accordance with ASTM D256.
b) Pencil hardness (2, 942 N (300g·f)) was measured in accordance with ASTM D3363.
c) Pigment colorability was evaluated from the value L of specimens for colorability testing measured using a color meter. As the value of L becomes lower, brightness becomes lower and dark black renders, which means superior pigment colorability.
d) Vicat softening point (5kg & 50°C/h) was measured in accordance with ASTM D1525.
e) Weather resistance was evaluated by testing a resin in a weather-o-meter® (ATLAS, Ci35A) at 83°C over a water spray cycle of 18 min and 120 min for 2,000 hours and measuring variation in color (ΔE) of the tested specimen in accordance with the following equation 1. ΔE represents an arithmetical mean of Hunter Lab values before and after weather resistance testing for 2000 hours and the lower the value of ΔE, the better the weather resistance.

**Table 1**

| | Ex. 1 | Ex. 2 | Ex. 3 | Ex. 4 | Ex. 5 | Ex. 6 | Ex. 7 |
|---|---|---|---|---|---|---|---|
| Impact strength | 19 | 16 | 23 | 17 | 20 | 19 | 25 |
| Pencil hardness | HB | HB | HB | HB | HB | HB | HB |
| Pigment colorability | 14.7 | 13.2 | 16.1 | 14.6 | 14.8 | 14.8 | 12.9 |
| Vicat softening point | 104 | 110 | 100 | 107 | 102 | 105 | 105 |
| Weather resistance | 1.7 | 1.5 | 2.0 | 1.8 | 1.6 | 1.8 | 2.7 |

**Table 2**

| | Comp. Ex. 1 | Comp. Ex. 2 | Comp. Ex. 3 | Comp. Ex. 4 | Comp. Ex. 5 |
|---|---|---|---|---|---|
| Impact strength | 3 | 20 | 11 | 22 | 29 |
| Pencil hardness | HB | HB | HB | 28 | 2B |
| Pigment colorability | 12.8 | 14.6 | 15.1 | 23.5 | 20.5 |
| Vicat softening point | 113 | 87 | 105 | 91 | 92 |
| Weather resistance | 1.3 | 1.8 | 1.9 | 2.9 | 4.9 |

As can be seen from Tables 1 and 2, thermoplastic resin compositions of Examples 1 to 7 according to the present invention, as compared to Comparative Examples 1 to 5, exhibited superior physical properties such as scratch resistance, pigment colorability, impact strength and weather resistance as well as excellent heat resistance.

## Claims

1. A thermoplastic resin composition comprising:
a) 20 to 60 parts by weight of a first graft copolymer of an aromatic vinyl compound and a vinyl cyanide compound on a rubber latex;
b) 0.1 to 40 parts by weight of a second copolymer of a (meth)acrylic acid alkyl ester compound, an aromatic vinyl compound, and a vinyl cyanide compound; and
c) 40 to 80 parts by weight of a third copolymer of a (meth)acrylic acid alkyl ester compound, an aromatic vinyl compound and an acid anhydride, based on the total weight of the thermoplastic resin composition.

2. The thermoplastic resin composition according to claim 1, wherein at least one comonomer selected from the group consisting of an unsaturated acid compound, an imide-based compound and a vinyl cyanide compound, is further used for polymerization of the third copolymer (c).

3. The thermoplastic resin composition according to claim 2, wherein the unsaturated acid compound is at least one selected from the group consisting of acrylic acid and methacrylic acid.

4. The thermoplastic resin composition according to claim 2, wherein the imide-based compound is selected from the group consisting of maleimide, N-methyl maleimide, N-ethyl maleimide, N-isopropyl maleimide, N-lauryl maleimide, N-benzyl maleimide, N-tribromophenyl maleimide, N-butyl maleimide, N-phenyl maleimide and N-cyclohexyl maleimide.

5. The thermoplastic resin composition according to claim 1, wherein the rubber latex of (a) is acrylic rubber latex or conjugated diene rubber latex.

6. The thermoplastic resin composition according to claim 1, wherein the first graft copolymer of (a) is graft-prepared by polymerizing 20 to 70% by weight of acrylic rubber latex or conjugated diene rubber latex, 10 to 50% by weight of the aromatic vinyl compound and 5 to 35% by weight of the vinyl cyanide compound.

7. The thermoplastic resin composition according to claim 1, wherein the second copolymer of (b) is 40 to 80% by weight of the (meth)acrylic acid alkyl ester compound, 10 to 40% by weight of the aromatic vinyl compound and 1 to 20% by weight of the vinyl cyanide compound.

8. The thermoplastic resin composition according to claim 1 or 2, wherein the third copolymer of (c) is 40 to 80% by weight of the (meth)acrylic acid alkyl ester compound, 10 to 40% by weight of the aromatic vinyl compound, 5 to 20% by weight of the acid anhydride and 0 to 10% by weight of an additional comonomer.

9. The thermoplastic resin composition according to claim 5, wherein the acrylic rubber latex is an alkyl acrylate rubber polymer and is at least one selected from the group consisting of butyl acrylate, ethyl hexyl acrylate and a mixture thereof.

10. The thermoplastic resin composition according to claim 5, wherein the conjugated diene rubber latex is at least one selected from the group consisting of butadiene rubber latex, styrene-butadiene copolymer rubber, acrylonitrile-butadiene copolymer rubber, ethylene-propylene diene rubber and mixtures thereof.

11. The thermoplastic resin composition according to claim 1, wherein the rubber latex has a glass transition temperature of -90°C to -20°C and an average particle diameter of 80 nm to 600 nm.

12. The thermoplastic resin composition according to claim 1, wherein the (meth)acrylic acid alkyl ester compound of (b) and (c) is at least one selected from the group consisting of (meth)acrylic acid methyl ester, (meth)acrylic acid ethyl ester, (meth)acrylic acid propyl ester, (meth)acrylic acid 2-ethylhexyl ester, (meth)acrylic acid decyl ester and (meth)acrylic acid lauryl ester.

13. The thermoplastic resin composition according to claim 1, wherein the aromatic vinyl compound of (a), (b) and (c) is at least one selected from the group consisting of styrene, alpha-methyl styrene, para-methyl styrene and vinyl toluene.

14. The thermoplastic resin composition according to claim 1, wherein the vinyl cyanide compound of (a) and (b) is selected from the group consisting of acrylonitrile, methacrylonitrile and a mixture thereof.

15. The thermoplastic resin composition according to claim 1, wherein the acid anhydride of (c) is at least one selected from the group consisting of maleic anhydride, itaconic anhydride, citraconic anhydride and a mixture thereof.

16. The thermoplastic resin composition according to claim 1, further comprising at least one additive selected from the group consisting of a lubricant, an antioxidant, a UV stabilizer, a pigment and an inorganic filler.

## Patentansprüche

1. Thermoplastische Harzzusammensetzung, umfassend:
a) 20 bis 60 Gewichtsteile eines ersten Propfcopolymers einer aromatischen Vinylverbindung und einer Vinylcyanidverbindung auf einem Kautschuklatex;
b) 0,1 bis 40 Gewichtsteile eines zweiten Copolymers einer (Meth)acrylsäurealkylesterverbindung, einer aromatischen Vinylverbindung und einer Vinylcyanidverbindung; und
c) 40 bis 80 Gewichtsteile eines dritten Copolymers einer (Meth)acrylsäurealkylesterverbindung, einer aromatischen Vinylverbindung und eines Säureanhydrids, bezogen auf das Gesamtgewicht der thermoplastischen Harzzusammensetzung.

2. Thermoplastische Harzzusammensetzung nach Anspruch 1, wobei zumindest ein Comonomer, ausgewählt aus der Gruppe, bestehend aus einer ungesättigten Säureverbindung, einer Imid-basierten Verbindung und einer Vinylcyanidverbindung, ferner verwendet wird, um das dritte Copolymer (c) zu polymerisieren.

3. Thermoplastische Harzzusammensetzung nach Anspruch 2, wobei die ungesättigte Säureverbindung zumindest eine, ausgewählt aus der Gruppe, bestehend aus Acrylsäure und Methacrylsäure, ist.

4. Thermoplastische Harzzusammensetzung nach Anspruch 2, wobei die Imid-basierte Verbindung ausgewählt ist aus der Gruppe, bestehend aus Maleimid, N-Methylmaleimid, N-Ethylmaleimid, N-Isopropylmaleimid, N-Laurylmaleimid, N-Benzylmaleimid, N-Tribromphenylmaleimid, N-Butylmaleimid, N-Phenylmaleimid und N-Cyclohexylmaleimid.

5. Thermoplastische Harzzusammensetzung nach Anspruch 1, wobei der Kautschuklatex aus (a) Acrylkautschuklatex oder konjugiertes-Dienkautschuklatex ist.

6. Thermoplastische Harzzusammensetzung nach Anspruch 1, wobei das erste Pfropfcopolymer aus (a) Pfropf-hergestellt durch Polymerisieren von 20 bis 70 Gewichtsprozent von Acrylkautschuklatex oder konjugiertes-Dienkautschuklatex, 10 bis 50 Gewichtsprozent einer aromatischen Vinylverbindung und 5 bis 35 Gewichtsprozent einer Vinylcyanidverbindung ist.

7. Thermoplastische Harzzusammensetzung nach Anspruch 1, wobei das zweite Copoylmer aus (b) 40 bis 80 Gewichtsprozent der (Meth)acrylsäurealkylesterverbindung, 10 bis 40 Gewichtsprozent der aromatischen Vinylverbindung und 1 bis 20 Gewichtsprozent der Vinylcyanidverbindung ist.

8. Thermoplastische Harzzusammensetzung nach Anspruch 1 oder 2, wobei das dritte Copolymer aus (c) 40 bis 80 Gewichtsprozent der (Meth)acrylsäurealkylesterverbindung, 10 bis 40 Gewichtsprozent der aromatischen Vinylverbindung, 5 bis 20 Gewichtsprozent des Säureanhydrids und 0 bis 10 Gewichtsprozent eines zusätzlichen Comonomers ist.

9. Thermoplastische Harzzusammensetzung nach Anspruch 5, wobei der Acrylkautschuklatex ein Alkylacrylatkautschukpolymer ist und zumindest eine ausgewählt aus der Gruppe, bestehend aus Butylacrylat, Ethylhexylacrylat und einer Mischung hiervon ist.

10. Thermoplastische Harzzusammensetzung nach Anspruch 5, wobei der konjugierte-Dienkautschuklatex zumindest einer ausgewählt aus der Gruppe, bestehend aus Butadienkautschuklatex, Styrol-Butadiencopolymerkautschuk, Acrylonitrilbutadiencopolymerkautschuk, Ethylen-Propylendienkautschuk und Mischungen hiervon ist.

11. Thermoplastische Harzzusammensetzung nach Anspruch 1, wobei der Kautschuklatex eine Glasübergangstemperatur von -90°C bis -20°C und einen durchschnittlichen Partikeldurchmesser von 80 nm bis 600 nm hat.

12. Thermoplastische Harzzusammensetzung nach Anspruch 1, wobei die (Meth)acrylsäurealkylesterverbindung aus (b) und (c) zumindest eine ausgewählt aus der Gruppe, bestehend aus (Meth)acrylsäuremethylester, (Meth)acrylsäureethylester, (Meth)acrylsäurepropylester, (Meth)acrylsäure-2-ethylhexylester, (Meth)acrylsäuredecylester und (Meth)acrylsäurelaurylester ist.

13. Thermoplastische Harzzusammensetzung nach Anspruch 1, wobei die aromatische Vinylverbindung aus (a), (b) und (c) zumindest eine ausgewählt aus der Gruppe, bestehend aus Styrol, alpha-Methylstyrol, para-Methylstyrol und Vinyltoluol ist.

14. Thermoplastische Harzzusammensetzung nach Anspruch 1, wobei die Vinylcyanidverbindung aus (a) und (b) ausgewählt ist aus der Gruppe, bestehend aus Acrylnitril, Methacrylnitril und Mischungen davon.

15. Thermoplastische Harzzusammensetzung nach Anspruch 1, wobei das Säureanhydrid aus (c) zumindest eines ausgewählt aus der Gruppe, bestehend aus Maleinsäureanhydrid, Itaconsäureanhydrid, Citraconsäureanhydrid und Mischungen derselben ist.

16. Thermoplastische Harzzusammensetzung nach Anspruch 1, ferner zumindest ein Additiv umfassend, ausgewählt aus der Gruppe, bestehend aus einem Schmiermittel, einem Antioxidans, einem UV-Stabilisator, einem Pigment und einem anorganischen Füllstoff.

## Revendications

1. Composition de résine thermoplastique comprenant :
(a) 20 à 60 parties en poids d'un premier copolymère greffé d'un composé de vinyle aromatique et d'un composé de cyanure de vinyle sur un latex de caoutchouc ;
(b) 0,1 à 40 parties en poids d'un deuxième copolymère d'un composé d'ester alkylique de l'acide (méth)acrylique, d'un composé de vinyle aromatique et d'un composé de cyanure aromatique ; et
(c) 40 à 80 parties en poids d'un troisième copolymère d'un composé d'ester alkylique de l'acide (méth)acrylique, d'un composé de vinyle aromatique et d'un anhydride d'acide par rapport au poids total de la composition de résine thermoplastique.

2. Composition de résine thermoplastique selon la revendication 1, dans laquelle au moins un comonomère sélectionné parmi le groupe constitué d'un composé d'acide insaturé, d'un composé à base d'imide et d'un composé de cyanure de vinyle est en outre utilisé pour la polymérisation du troisième copolymère (c).

3. Composition de résine thermoplastique selon la revendication 2, dans laquelle le composé d'acide insaturé est au moins un composé sélectionné parmi le groupe constitué d'acide acrylique et d'acide méthacrylique.

4. Composition de résine thermoplastique selon la revendication 2, dans laquelle le composé à base d'imide est sélectionné parmi le groupe constitué de maléimide, de N-méthyl-maléimide, de N-éthyl-maléimide, de N-isopropyl-maléimide, de N-lauryl-maléimide, de N-benzyl-maléimide, de N-tribromophényl-maléimide, de N-butyl-maléimide, de N-phényl-maléimide et de N-cyclohexyl-maléimide.

5. Composition de résine thermoplastique selon la revendication 1, dans laquelle le latex de caoutchouc de (a) est un latex de caoutchouc acrylique ou un latex de caoutchouc diénique conjugué.

6. Composition de résine thermoplastique selon la revendication 1, dans laquelle le premier copolymère greffé de (a) est préparé par greffage par la polymérisation de 20 à 70 % en poids de latex de caoutchouc acrylique ou de latex de caoutchouc diénique conjugué, de 10 à 50 % en poids du composé vinylique aromatique et de 5 à 35 % en poids du composé de cyanure de vinyle.

7. Composition de résine thermoplastique selon la revendication 1, dans laquelle le deuxième copolymère de (b) représente 40 à 80 % en poids de la teneur en composé d'ester alkylique de l'acide (méth)acrylique, 10 à 40 % en poids de la teneur en composé de vinyle aromatique et 1 à 20 % en poids de la teneur en composé de cyanure de vinyle.

8. Composition de résine thermoplastique selon la revendication 1 ou 2, dans laquelle le troisième copolymère de (c) représente 40 à 80 % en poids de la teneur en composé d'ester alkylique de l'acide (méth)acrylique, 10 à 40 % en poids de la teneur en composé de vinyle aromatique, 5 à 20 % en poids de la teneur en anhydride d'acide et 0 à 10 % en poids de la teneur en comonomère supplémentaire.

9. Composition de résine thermoplastique selon la revendication 5, dans laquelle le latex de caoutchouc acrylique est un polymère caoutchouteux d'acrylate d'alkyle et est au moins un composé sélectionné parmi le groupe constitué d'acrylate de butyle, d'acrylate d'éthylhexyle et d'un mélange de ceux-ci.

10. Composition de résine thermoplastique selon la revendication 5, dans laquelle le latex de caoutchouc diénique conjugué est au moins un composé sélectionné parmi le groupe constitué de latex de caoutchouc de butadiène, de caoutchouc de copolymère styrène-butadiène, de caoutchouc de copolymère acrylonitrile-butadiène, de caoutchouc diénique d'éthylène propylène et de mélanges de ceux-ci.

11. Composition de résine thermoplastique selon la revendication 1, dans laquelle le latex de caoutchouc a une température de transition vitreuse de -90 °C à -20 °C et un diamètre particulaire moyen de 80 nm à 600 nm.

12. Composition de résine thermoplastique selon la revendication 1, dans laquelle le composé d'ester alkylique de l'acide (méth)acrylique de (b) et de (c) est au moins un composé sélectionné parmi le groupe constitué d'ester méthylique de l'acide (méth)acrylique, d'ester éthylique de l'acide (méth)acrylique, d'ester propylique de l'acide (méth)acrylique, d'ester 2-éthylhexyle de l'acide (méth)acrylique, d'ester décylique de l'acide (méth)acrylique et d'ester laurylique de l'acide (méth)acrylique.

13. Composition de résine thermoplastique selon la revendication 1, dans laquelle le composé de vinyle aromatique de (a), de (b) et de (c) est au moins un composé sélectionné parmi le groupe constitué de styrène, d'alpha-méthyle styrène, de para-méthyle styrène et de vinyltoluène.

14. Composition de résine thermoplastique selon la revendication 1, dans laquelle le composé de cyanure de vinyle de (a) et de (b) est sélectionné parmi le groupe constitué d'acrylonitrile, de méthacrylonitrile et d'un mélange de ceux-ci.

15. Composition de résine thermoplastique selon la revendication 1, dans laquelle l'anhydride d'acide de (c) est au moins un composé sélectionné parmi le groupe constitué d'anhydride maléique, d'anhydride itaconique, d'anhydride citraconique et d'un mélange de ceux-ci.

16. Composition de résine thermoplastique selon la revendication 1, comprenant en outre un additif sélectionné parmi le groupe constitué d'un lubrifiant, d'un antioxydant, d'un stabilisateur aux UV, d'un pigment et d'une charge inorganique.
